# EUROPÄISCHE PATENTSCHRIFT

(11) **EP 3 528 976 B1**
(45) Veröffentlichungstag und Bekanntmachung des Hinweises auf die Patenterteilung: **07.10.2020**
(21) Anmeldenummer: 17811826.1
(22) Anmeldetag: 18.10.2017
(51) Int. Cl.: B21D 5/04, B21D 43/11

(54) **FERTIGUNGSANLAGE MIT MANIPULATIONSVORRICHTUNG**
PRODUCTION INSTALLATION HAVING A MANIPULATION DEVICE
INSTALLATION DE FABRICATION PRÉSENTANT UN DISPOSITIF DE MANIPULATION

(30) Priorität: 20.10.2016 AT 509572016
(43) Veröffentlichungstag der Anmeldung: 28.08.2019
(73) Patentinhaber: TRUMPF Maschinen Austria GmbH & Co. KG., 4061 Pasching (AT)
(72) Erfinder: DAL CERRO, Roberto, 37044 Cologna Veneta (VR) (IT); DAL LAGO, Matteo, 37044 Cologna Veneta (VR) (IT); SPEZIALI, Stefano, 06034 Foligno (PG) (IT)
(74) Vertreter: Burger, Hannes
(86) Internationale Anmeldenummer: PCT/AT2017/060270
(87) Internationale Veröffentlichungsnummer: WO 2018/071938

(56) Entgegenhaltungen:
- EP-A2- 0 097 637
- DE-A1- 2 839 978
- DE-A1- 4 222 741
- DE-A1- 19 639 590
- US-A- 5 343 727

## Beschreibung

Die Erfindung betrifft eine Fertigungsanlage zur Fertigung von Werkstücken aus Blech, insbesondere durch Umformung mittels eines Biegevorgangs.

Die DE 28 39 978 A1 beschreibt eine gattungsgemäß ausgebildete Fertigungsanlage zur Fertigung von Werkstücken aus einem Blech mittels Umformung desselben. Die Fertigungsanlage umfasst eine Biegemaschine, einen Auflagetisch sowie eine Manipulationsvorrichtung. Die Biegemaschine umfasst ihrerseits ein feststehendes Maschinengestell und einen daran gehaltenen oberen und einen unteren Klemmbalken, wobei einer der Klemmbalken relativ bezüglich des Maschinengestells verstellbar ist, um das herzustellende Werkstück zumindest während des Biegevorganges zwischen jeweils an den Klemmbalken angeordneten Klemmbacken klemmend zu halten. Der Auflagetisch definiert mit seiner Auflagefläche eine Auflageebene für das Blech oder das herzustellende Werkstück. Die Manipulationsvorrichtung umfasst eine Traganordnung sowie eine Halteanordnung, wobei die Halteanordnung eine obere Halteeinheit und eine damit zusammenwirkende untere Halteeinheit aufweist. Die Traganordnung ist C-förmig ausgebildet und umgreift das zu manipulierende Blech mit seinen beiden Schenkeln, welche mittels eines vertikalen Verbindungsstegs miteinander in Verbindung stehen. Die gesamte Traganordnung ist in senkrechter Richtung bezüglich des von den Klemmbacken definierten Biegebereichs verstellbar. Nachteilig dabei ist, dass eine massiv ausgebildete Traganordnung als gesamte Einheit für die Manipulation des Blechs zu verlagern ist. Außerdem ist durch den Verbindungssteg der direkte Zugang von der Beschickungsseite her versperrt und zusätzlich der zwischen den Halteeinheiten und dem Verbindungssteg vorhandene Manipulationsfreiraum durch die Schenkellängen begrenzt.

Die DE 196 39 590 A1 beschreibt ebenfalls ein gattungsgemäß ausgebildetes Biegezentrum zur Fertigung von Werkstücken aus einem Blech mittels Umformung. Das Biegezentrum umfasst eine Biegemaschine, einen Auflagetisch sowie eine Manipulationsanordnung mit zwei voneinander unabhängigen Manipulatoren. Die Biegemaschine umfasst ihrerseits ein feststehendes Maschinengestell und daran gehaltene obere und untere Klemmbalken, wobei einer der Klemmbalken relativ bezüglich des Maschinengestells verstellbar ist, um das herzustellende Werkstück zumindest während des Biegevorganges zwischen jeweils an den Klemmbalken angeordneten Klemmbacken klemmend zu halten. Der Auflagetisch definiert mit seiner Auflagefläche eine Auflageebene für das Blech oder das herzustellende Werkstück. Der zweite Manipulator umfasst eine Traganordnung sowie eine Halteanordnung, wobei die Halteanordnung eine obere Halteeinheit und eine damit zusammenwirkende untere Halteeinheit aufweist. Die beiden Traganordnungen sind durch Linearführungen gebildet, an welchen jeweils mittels Gewindespindeln die daran geführte Halteeinheit verstellt werden kann. Weiters sind die beiden Traganordnungen jeweils an einem Gehäuse der Biegezelle befestigt und an ihren vom Gehäuse der Biegezelle abgewendeten Enden mit einem Vertikalsteg miteinander verbunden. In diesem Endbereich ist auch der gemeinsame Spindelantrieb angeordnet. Die untere Gewindespindel ist direkt von einem Antriebsmotor angetrieben, wobei von der unteren Gewindespindel die Drehbewegung auf die obere Gewindespindel von einem endlosen Verbindungsmittel übertragen wird. Es ist hier ebenfalls durch den Vertikalsteg sowie die Antriebsverbindung zwischen den Gewindespindeln der direkte Zugang von der Beschickungsseite her versperrt. Daher ist auch hier nur eine in paralleler Richtung bezüglich der Biegekante ausgerichtete Zufuhrrichtung des zu biegenden Blechs in den vor der Biegemaschine befindlichen Beschickungsbereich möglich.

Die DE 42 22 741 A1 beschreibt eine Fertigungsstraße zur Herstellung einer Stahlkassette für Decken- und/oder Wandkonstruktionen aus einer Blechtafel. Die Fertigungsstraße umfasst in paralleler Ausrichtung bezüglich der Biegekante der Schwenkbiegestation noch eine dieser in Transportrichtung der Blechtafel vorgelagerte Stanzstation und eine dieser nachgelagerte Schweißstation. Zur Auflage der Blechtafel ist in einem vor der Schwenkbiegestation befindlichen Beschickungsbereich ein Kugelrolltisch angeordnet. Die Schwenkbiegestation umfasst zur klemmenden Halterung der Blechtafel einen feststehenden Pressentisch sowie eine schwenkbaren Niederhalter mit einer Höhenverstellanordnung. Weiters umfasst die Schwenkbiegestation einen Manipulator mit einem in den vor der Biegemaschine befindlichen Beschickungsbereich ragenden Auslegerarm. Der Auslegerarm kann in paralleler Ausrichtung bezüglich der Biegekante der Schwenkbiegestation verstellt werden. Am Auslegerarm ist ein in seiner Längserstreckung verfahrbarer und um eine Vertikalachse drehbarer Greifer geführt. Die Blechtafel wird vom Greifer an den in der Blechtafel vorgesehenen Passlöchern oder daran angebrachten Mitnahmebolzen ergriffen und entsprechend den vorgesehenen Verformungsschritten verlagert. Die Blechtafel bleibt dabei ständig auf dem Kugelrolltisch liegen und wird nur in dieser Auflageebene lageverändert. Ein unterstützender Weitertransport zwischen den Arbeitsstationen kann mittels eines Laufwagens in Kombination mit dem Greifer erfolgen.

Es beschreibt die US 5,343,727 A eine weitere Fertigungsanlage zur Fertigung von Werkstücken aus einem Blech mittels Umformung. Die Fertigungsanlage umfasst eine Biegemaschine, einen durch umlaufende Transportbänder gebildeten Auflagetisch sowie eine zwischen den Transportbändern befindliche stationäre Klemmvorrichtung. Die Biegemaschine umfasst ihrerseits ein feststehendes Maschinengestell und einen daran gehaltenen oberen und einen unteren Klemmbalken, wobei einer der Klemmbalken relativ bezüglich des Maschinengestells verstellbar ist, um das herzustellende Werkstück zumindest während des Biegevorganges zwischen jeweils an den Klemmbalken angeordneten Klemmbacken klemmend zu halten. Befindet sich das zu biegende Blech in seiner Biegeposition, wird der obere verstellbare Teil der Klemmvorrichtung in Richtung auf den unteren Teil der Klemmvorrichtung verstellt und damit das Blech positioniert gehalten. Dabei handelt es sich ausschließlich um eine zusätzliche Klemmvorrichtung und um keine Manipulationsvorrichtung für die Lageveränderung des Blechs. Es ist nicht zu entnehmen, wie die Teile der Klemmvorrichtung und mit welchen Bauteilen die Teile der Klemmvorrichtung relativ bezüglich der Biegemaschine gehalten oder befestigt sind.

Aus der EP 0 097 637 A2 ist eine Vorrichtung zum Zuführen von Blechtafeln zu einer Biegemaschine bekannt geworden. Die Vorrichtung besteht aus einem auf einem Gestell verfahrbaren und eine Spanneinrichtung für die Blechtafel tragenden Schlitten. Der Schlitten bildet einen Rahmen mit seitlich aufragenden Stehern und einem die Steher auf der vom Schlitten abgewendeten Seite verbindenden Querholm. Die obere Spannbacke der Spanneinrichtung ist am Querholm angeordnet und mittels eines Spannzylinders in Richtung auf die beiden feststehende untere Spannbacke hin verstellbar, um die Blechtafel klemmend zu halten. Weiters ist an dem den Schlitten tragenden Gestell ein vom Gestell aufragender Ausleger angeordnet. Der Ausleger ist auf der von der Biegemaschine abgewendeten Seite des Schlittens angeordnet und trägt den Drehantrieb für die Blechtafel. Der Drehantrieb umfasst eine antreibbare Klemmbacke mit einer senkrecht zur Einspannebene der Blechtafel ausgerichteten Drehachse. Um eine Verlagerung der Blechtafel um die Drehachse des Drehantriebs durchführen zu können, ist der Schlitten auf die von der Biegemaschine abgewendet Seite hin zum Ausleger mit dem Drehantrieb zu verstellen. Befindet sich die obere Spannbacke in vertikaler Richtung oberhalb der Klemmbacke des Drehantriebs, greift die Klemmbacke des Drehantriebs zwischen die beiden voneinander beabstandet angeordneten unteren Spannbacke hindurch auf die Unterseite der Blechtafel. Die Klemmbacke des Drehantriebs wirkt mit der oberen Spannbacke als Gegenbacke zusammen. Der Beschickungsbereich vor der Biegemaschine wir hier durch die seitlich vom Schlitten aufragenden Steher unterbrochen und begrenzt.

Eine weitere gattungsgemäße Fertigungsanlage beschreibt die DE 196 21 658 A1. Diese umfasst ebenfalls eine Biegemaschine, einen Auflagetisch sowie eine Manipulationsvorrichtung. Die Biegemaschine umfasst ihrerseits ein feststehendes Maschinengestell und einen daran gehaltenen oberen und einen unteren Klemmbalken, wobei einer der Klemmbalken relativ bezüglich des Maschinengestells verstellbar ist, um das herzustellende Werkstück zumindest während des Biegevorganges zwischen jeweils an den Klemmbalken angeordneten Klemmbacken klemmend zu halten. Der Auflagetisch definiert mit seiner Auflagefläche eine Auflageebene für das Blech oder das herzustellende Werkstück. Die Manipulationsvorrichtung umfasst eine Traganordnung sowie eine Halteanordnung, wobei die Traganordnung am Maschinengestell gehalten ist und sich oberhalb der Auflageebene befindet. An der Traganordnung ist die gesamte Halteanordnung verstellbar daran in senkrechter Richtung bezüglich eines von den Klemmbacken definierten Biegebereichs geführt und umfasst eine obere Halteeinheit und eine damit zusammenwirkende untere Halteeinheit, wobei die beiden Halteeinheiten eine Art Greifzange ausbilden. Die Halteeinheiten können weiters gemeinsam um eine vertikal ausgerichtete Drehachse in ihrer Lage verstellt werden. Nachteilig dabei ist, dass eine der Halteeinheiten über die Auflageebene vorragt und auch hier der Manipulationsraum nicht unterbrechungslos für die Anordnung und Manipulation des Blechs oder des Werkstücks zur Verfügung steht.

Aufgabe der vorliegenden Erfindung war es, die Nachteile des Standes der Technik zu überwinden und eine Fertigungsanlage zur Verfügung zu stellen, mittels derer ein Benutzer oder eine automatisierte Zufuhrvorrichtung in der Lage ist, eine einfache Beschickung der Biegemaschine mit dem zu bearbeitenden Blech oder dem weiter zu bearbeitenden Werkstück ohne störende Teile der Manipulationsvorrichtung vorzunehmen zu können. Weiters soll auch die Manipulationsgeschwindigkeit durch Reduzierung der bewegten Massen erhöht werden.

Diese Aufgabe wird durch eine Vorrichtung gemäß den Ansprüchen gelöst.

Die erfindungsgemäße Fertigungsanlage dient zur Fertigung von Werkstücken aus Blech, insbesondere durch Umformung, die Fertigungsanlage umfasst:
- eine Biegemaschine mit einem feststehenden Maschinengestell, einem unteren Klemmbalken mit zumindest einer daran gehaltenen unteren Klemmbacke, sowie einem oberen Klemmbalken mit zumindest einer daran gehaltenen oberen Klemmbacke, wobei einer der Klemmbalken relativ bezüglich des Maschinengestells verstellbar ist, um das herzustellende Werkstück zumindest während des Biegevorganges zwischen den beiden Klemmbacken klemmend zu halten,
- einen Auflagetisch, welcher Auflagetisch mit seiner Auflagefläche eine Auflageebene für das Blech oder das herzustellende Werkstück definiert,
- eine Manipulationsvorrichtung mit einer Traganordnung und mit einer Halteanordnung, wobei die Halteanordnung eine oberen Halteeinheit und eine damit zusammenwirkende untere Halteeinheit umfasst, und wobei die in einem Frontbereich der Biegenmaschine befindliche Manipulationsvorrichtung für die Manipulation des Blechs oder des herzustellenden Werkstücks von einer geöffneten Einlegestellung in eine das Blech oder das Werkstück klemmende Klemmstellung verstellbar ist, und dabei
- die Traganordnung eine eigenständige obere Trageinheit und eine eigenständige untere Trageinheit aufweist,
- die obere Trageinheit oberhalb der Auflageebene angeordnet ist,
- die untere Trageinheit unterhalb der Auflageebene angeordnet ist,
- die obere Halteeinheit an der oberen Trageinheit geführt und mittels einer ersten Antriebseinheit verstellbar ist,
- die untere Halteeinheit an der unteren Trageinheit geführt und mittels einer zweiten Antriebseinheit verstellbar ist,
- die obere Trageinheit am Maschinengestell und/oder am oberen Klemmbalken angeordnet ist,
- die untere Trageinheit am Maschinengestell und/oder am unteren Klemmbalken angeordnet ist, und weiters
- in einer für das zu manipulierende Blech oder das herzustellende Werkstück aufzunehmenden geöffneten Einlegestellung der Manipulationsvorrichtung sowie in einem Beschickungsbereich vor der Biegemaschine die obere Trageinheit mit der oberen Halteeinheit vollständig oberhalb der Auflageebene angeordnet ist und die untere Trageinheit mit der unteren Halteeinheit vollständig unterhalb der Auflageebene angeordnet ist,
- sodass im Frontbereich der Biegemaschine ein unterbrechungsloser Manipulationsfreiraum zur Aufnahme und Manipulation des zu bearbeitenden Werkstücks vorhanden ist.

Der dadurch erzielte Vorteil liegt darin, dass die Traganordnung von einer eigenständigen oberen Trageinheit und einer eigenständigen unteren Trageinheit gebildet ist, welche Trageinheiten jeweils beidseits, nämlich einmal oberhalb und einmal unterhalb der Auflageebene, angeordnet sind. Durch diese räumliche vertikale Trennung der Trageinheiten voneinander wird es auch möglich, die jeweils an den Trageinheiten angeordneten Halteeinheiten für die klemmende Halterung des Blechs oder des Werkstücks ebenfalls so anzuordnen, dass die obere Halteeinheit vollständig oberhalb der Auflageebene und die untere Halteeinheit vollständig unterhalb der Auflageebene angeordnet ist. So kann zwischen den Halteeinheiten ein ausreichender Manipulationsfreiraum im Frontbereich der Biegemaschine geschaffen werden, welcher unterbrechungslos zur Aufnahme und Manipulation des Blechs oder des zu bearbeitenden Werkstücks zur Verfügung steht. Damit wird es für einen Bediener oder für eine weitere Manipulationsvorrichtung der Fertigungsanlage möglich, das zu bearbeitende Blech oder das weiter zu verarbeitende Werkstück ungehindert von der Frontseite oder Beschickungsseite der Biegemaschine in den Bereich des Auflagetisches zu verbringen und mittels der eigenen Manipulationsvorrichtung zuführen zu können.

Weiters kann durch die voneinander räumlich getrennte Anordnung der beiden Trageinheiten mit den jeweils daran angeordneten Halteeinheiten eine im Bewegungsbereich bzw. Hantierungsbereich der Manipulationsvorrichtung mögliche Erfassung und Klemmung des Blechs oder des weiter zu bearbeitenden Werkstücks ungehindert erfolgen. Darüber hinaus kann dadurch aber auch noch der Klemmpunkt bzw. Klemmbereich der Manipulationsvorrichtung am jeweiligen Blech oder Werkstück im Wirkungsbereich der Manipulationsvorrichtung frei gewählt werden, ohne dass mögliche Kollisionen des Blechs oder Werkstücks mit Teilen der Manipulationsvorrichtung zu berücksichtigen sind.

Da die obere Trageinheit am Maschinengestell und/oder am oberen Klemmbalken angeordnet ist, wird damit die Masse an bewegten Teilen zur Durchführung der Manipulationsvorgänge reduziert. Weiters wird damit aber auch der Anlagenaufwand für ansonsten übliche Tragkonstruktionen verringert.

Es ist auch die untere Trageinheit am Maschinengestell und/oder am unteren Klemmbalken angeordnet. Dadurch wird ebenfalls eine platzsparende und massive Halterung der unteren Trageinheit erzielt. Darüber hinaus werden so aber auch die zur Durchführung der Manipulationsbewegung bewegten Massen relativ gering gehalten.

Weiters ist die obere Halteeinheit an der oberen Trageinheit verstellbar geführt. Dadurch wird ein eindeutiger Verfahrweg der oberen Halteinheit an der oberen Trageinheit festgelegt.

Es ist auch die untere Halteeinheit an der unteren Trageinheit verstellbar geführt. Damit wird ebenfalls ein eindeutig vorbestimmter Verfahrweg der unteren Halteinheit an der unteren Trageinheit festgelegt.

Eine andere Ausführungsform zeichnet sich dadurch aus, dass die obere Halteeinheit in senkrechter Richtung bezüglich einem, von zumindest einem der Klemmbacken definierten Biegebereich sowie in paralleler Richtung bezüglich der Auflageebene verstellbar ausgebildet ist. Damit kann ein eindeutig vordefinierter Verfahrweg sowie eine eindeutige Verfahrrichtung der oberen Halteeinheit relativ bezüglich der Biegemaschine festgelegt werden.

Eine weitere Ausbildung sieht vor, dass die untere Halteeinheit in senkrechter Richtung bezüglich einem, von zumindest einem der Klemmbacken definierten Biegebereich sowie in paralleler Richtung bezüglich der Auflageebene verstellbar ausgebildet ist. So kann ein eindeutig vordefinierter Verfahrweg sowie eine eindeutige Verfahrrichtung der unteren Halteeinheit relativ bezüglich der Biegemaschine festgelegt werden.

Eine andere Ausführungsform zeichnet sich dadurch aus, dass die obere Halteeinheit und die untere Halteeinheit gemeinsam und zueinander synchron verstellbar geführt sind. Durch die zueinander synchrone und gleichzeitige Verstellung der beiden Halteeinheiten an den diesen zugeordneten Trageinheiten kann so trotzdem eine einwandfreie Manipulation des Blechs oder des Werkstücks von den beiden ansonsten unabhängigen Halteeinheiten durchgeführt werden. Die gemeinsame und zueinander synchrone Verstellung bzw. Verstellbewegung kann durch aufeinander abgestimmte Antriebseinheiten mittels vordefinierter Verstellbewegungen in der Maschinensteuerung durchgeführt werden.

Eine weitere bevorzugte Ausführungsform ist dadurch gekennzeichnet, dass die obere Halteeinheit zumindest ein oberes Halteelement und die untere Halteeinheit zumindest ein unteres Halteelement aufweist. Durch das Vorsehen von jeweils eigenen Halteelementen an jeder der Halteeinheiten kann so eine definierte Haltewirkung auf das Blech oder Werkstück ausgeübt werden. Weiters kann damit aber auch die Masse der für die Manipulation benötigten Bauteile relativ gering gehalten werden.

Weiters kann es vorteilhaft sein, wenn zumindest eines der Halteelemente um eine in senkrechter Richtung bezüglich der Auflageebene ausgerichtete Drehachse verschwenkbar ist. Damit kann zusätzlich zu einer geradlinigen Verstellbewegung auch noch eine Umorientierung der vorgesehenen Biegelinie am Blech oder Werkstück bezüglich des von den Klemmbacken definierten Biegebereichs erfolgen. Diese Umorientierung kann durch eine rotatorische Bewegung des Blechs in paralleler Lage bezüglich der Auflageebene durchgeführt werden, um so auf geringstem Raum die Umorientierung vornehmen zu können. Bevorzugt kann für die Durchführung des Dreh- und/oder Schwenkvorganges des Blechs ein geringfügiges Anheben oder Abheben desselben in vertikaler Richtung bezüglich der Auflageebene durchgeführt werden, bevor der Schwenkvorgang durchgeführt wird.

Eine andere alternative Ausführungsform zeichnet sich dadurch aus, dass zumindest eines der Halteelemente in senkrechter Richtung bezüglich der Auflageebene in Richtung auf das jeweils bezüglich der Auflageebene gegenüberliegend angeordnete andere Halteelement verstellbar ausgebildet ist. Dadurch kann eine höhenmäßige Anpassung der jeweiligen Halteelemente auf die jeweilige Lage des zu manipulierenden Blechs oder Werkstücks durchgeführt werden.

Eine weitere mögliche und gegebenenfalls alternative Ausführungsform hat die Merkmale, dass die untere Halteeinheit weiters ein unteres Auflageelement umfasst, und das untere Auflageelement an der unteren Trageinheit in senkrechter Richtung bezüglich einem, von zumindest einem der Klemmbacken definierten Biegebereich sowie in paralleler Richtung bezüglich der Auflageebene verstellbar geführt ist. Durch das Vorsehen zumindest eines unteren Auflageelements kann so eine noch bessere Abstützung des Blechs oder zu bearbeitenden Werkstücks erzielt werden. Darüber hinaus kann so nicht nur eine zusätzliche Abstützung des unmittelbar in Bearbeitung befindlichen Blechs oder Werkstücks erfolgen, sondern auch gleichzeitig damit und unabhängig davon mittels der Halteelemente eine Vorpositionierung eines nachfolgend zu bearbeitenden Blechs oder Werkstücks durchgeführt werden. Dadurch können Stillstandzeiten der Biegemaschine weiter reduziert und die Wirtschaftlichkeit derselben zusätzlich erhöht werden.

Eine weitere Ausbildung sieht vor, dass das untere Auflageelement in senkrechter Richtung bezüglich der Auflageebene in Richtung auf die bezüglich der Auflageebene gegenüberliegend angeordnete obere Trageinheit verstellbar ausgebildet ist. Damit kann eine höhenmäßige Anpassung der Halteelemente auf die aktuelle Lage und Position des Blechs oder des weiter zu bearbeitenden Werkstücks einfach erfolgen.

Eine andere Ausführungsform zeichnet sich dadurch aus, dass das untere Halteelement unabhängig vom unteren Auflageelement an der unteren Trageinheit verstellbar geführt ist. Damit kann ein noch wirtschaftlicher durchzuführender Manipulationsvorgang erzielt werden und zusätzlich können auch noch Maschinen-Stillstandzeiten reduziert werden.

Eine weitere bevorzugte Ausführungsform ist dadurch gekennzeichnet, dass zumindest eine der Halteeinheiten, insbesondere die obere Halteeinheit, eine Kniehebelanordnung aufweist, mittels welcher Kniehebelanordnung das zumindest eine Halteelement in senkrechter Richtung bezüglich der Auflageebene von der geöffneten Einlegestellung in die Klemmstellung verstellbar ausgebildet ist. Durch das Vorsehen einer Kniehebelanordnung kann eine einfache mechanische Klemmung des Blechs oder Werkstücks zwischen den Halteelementen geschaffen werden. Weiters können damit aber auch die zur Klemmung aufzubringenden oder notwendigen Verstellkräfte bzw. Andrückkräfte reduziert werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Biegemaschine einer Fertigungsanlage, bei entferntem Auflagetische sowie entfernter Manipulationsvorrichtung, in Frontansicht;
- Fig. 2: die Fertigungsanlage nach Fig. 1, mit vereinfacht angedeuteter Manipulationsvorrichtung, in Seitenansicht;
- Fig. 3: eine mögliche Ausbildung der Manipulationsvorrichtung, in stilisierter Darstellung, in Seitenansicht;
- Fig. 4: eine mögliche Ausbildung einer Halteeinheit, in stilisierter Darstellung, in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

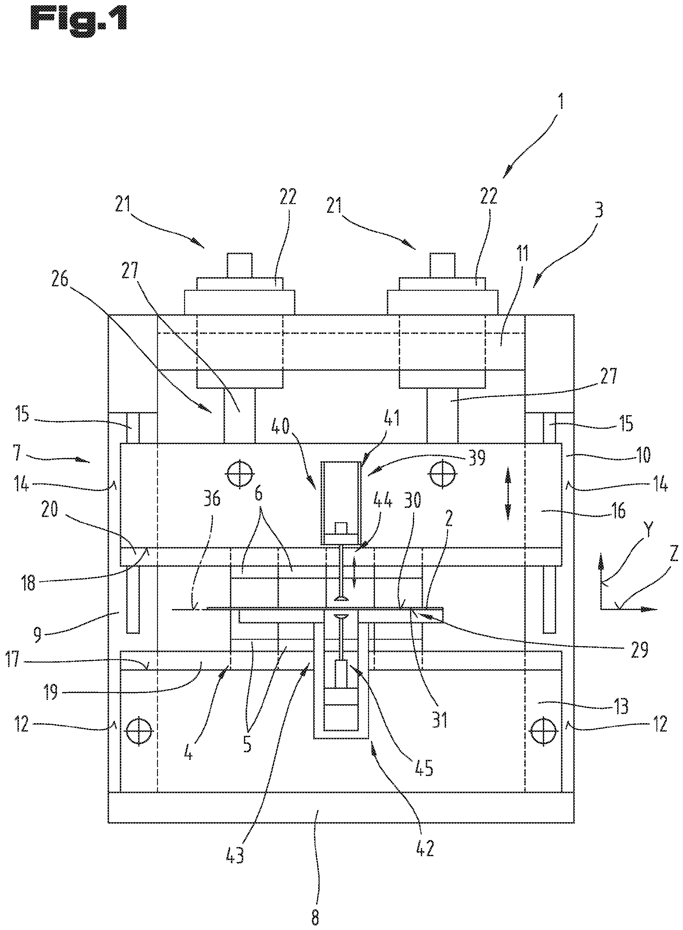

In den Fig. 1 bis 4 ist eine Fertigungsanlage 1 sowie Komponenten derselben in stark schematisch vereinfachten Darstellungen gezeigt, welche im vorliegenden Fall insbesondere für das Schwenkbiegen oder Schwingbiegen von aus Blech zu fertigenden Werkstücken 2 ausgebildet ist. Als Ausgangsmaterial wird zumeist ein metallischer Werkstoff verwendet, welcher in seinem unverformten Zustand als Flachmaterial bzw. Flachelement bezeichnet werden kann. So kann die Fertigungsanlage 1 auch als Schwenkbiegeanlage oder Schwingbiegeanlage bezeichnet werden.

Die im vorliegenden Fall für das Biegen eingesetzte Fertigungsanlage 1 umfasst eine Biegemaschine 3, insbesondere eine Presse, die unter anderem zur klemmenden Halterung der aus dem Blech zu fertigenden Werkstücke 2 oder Werkteile zwischen einem relativ zueinander verstellbaren Klemmwerkzeug 4 ausgebildet ist. Das Klemmwerkzeug 4 umfasst im vorliegenden Ausführungsbeispiel zumindest eine untere Klemmbacke 5, zumeist bevorzugt jedoch mehrere untere Klemmbacken 5 und zumindest eine obere Klemmbacke 6, zumeist bevorzugt jedoch mehrere damit zusammenwirkende obere Klemmbacken 6. Der oder die unteren Klemmbacken 5 können auch als Unterwange und der oder die oberen Klemmbacken 6 können auch als Oberwange bezeichnet werden.

Als Koordinatensystem wird bei derartigen Biegemaschine 3 grundsätzliches als "X"-Richtung jene Richtung bezeichnet, welche in einer Horizontalebene sowie in senkrechter Ausrichtung bezüglich der Längserstreckung der Klemmbacken 5, 6 verläuft. Somit ist dies jene Richtung, welche auch der Zufuhrrichtung oder der Entnahmerichtung entspricht.

Als "Y"-Richtung wird die Vertikalrichtung verstanden, welche somit in Höhenrichtung der Klemmbacken 5, 6 verläuft. Schließlich wird als "Z"-Richtung jene Richtung verstanden, welche in Längsrichtung oder in der Längserstreckung der Klemmbacken 5, 6 verläuft. Damit ist auch die Längserstreckung der später noch beschriebenen Biegekante in der "Z"-Richtung verlaufend ausgerichtet. Diese angegebenen Richtungen ("X", "Y" und "Z") definieren jeweils auch räumliche Achsen.

Die zumindest eine obere Klemmbacke 6 ist dabei oberhalb des zu fertigenden Werkstücks 2 an der Biegemaschine 3 angeordnet und dort auch ausreichend gehalten, insbesondere geklemmt. Auch die zumindest eine untere Klemmbacke 5 ist an der Biegemaschine 3 gehalten, insbesondere geklemmt.

Ein Maschinengestell 7 der Biegemaschine 3 umfasst beispielsweise von einer Bodenplatte 8 vertikal aufragend, zueinander beabstandet und parallel zueinander ausgerichtete Seitenwangen 9, 10. Diese sind bevorzugt durch einen massiven, beispielsweise aus einem Blechformteil gebildeten Querverband 11 an ihren von der Bodenplatte 8 distanzierten Endbereichen miteinander verbunden. Beim Maschinengestell 7 handelt es sich zumeist um einen massiven, bevorzugt auf einem ebenen Hallenboden feststehenden Bauteil der Biegemaschine 3. Die hier gezeigte Form ist nur beispielhaft für eine Vielzahl anderer möglicher Ausbildungen gewählt worden.

Die Seitenwangen 9, 10 können zur Bildung eines Freiraums für das Umformen des Werkstücks 2 bevorzugt in etwa C - förmig ausgebildet sein, wobei an Frontstirnflächen 12 von bodennahen Schenkeln der Seitenwangen 9, 10 ein feststehender, insbesondere auf der Bodenplatte 8 aufstehender unterer Klemmbalken 13 befestigt ist, der auch als Pressbalken bezeichnet werden kann. Dieser bevorzugt ortsfest angeordnete und feststehende untere Klemmbalken 13 kann auch als Klemmtisch bezeichnet werden, an welchem auch Teile des Klemmwerkzeugs 4 (insbesondere die unteren Klemmbacken 5) angeordnet und auch daran gehalten sind. An Frontstirnflächen 14 ist an von der Bodenplatte 8 entfernten Schenkel in Klemmbalkenführungen 15 ein zu dem unteren Klemmbalken 13 relativ verstellbarer, oberer Klemmbalken 16, insbesondere ein Druckbalken, geführt gelagert. Die Klemmbalkenführungen 15 sind zumeist als Linearführungen in den unterschiedlichsten Ausführungsformen ausgebildet. Auch dieser obere Klemmbalken 16 kann als Pressbalken bezeichnet werden, welcher jedoch relativ bezüglich des Maschinengestells 7 verlagerbar an diesem geführt ist. Auf einander gegenüberliegenden, parallel zueinander verlaufenden Stirnflächen 17, 18 der beiden Klemmbalken 13, 16 können Klemmbackenaufnahmen 19, 20 zur Bestückung mit dem oder den Klemmwerkzeugen 4, insbesondere den unteren und oberen Klemmbacken 5, 6, angeordnet sein. Das oder die Klemmwerkzeuge 4 können auch unter Zwischenschaltung eines nicht näher dargestellten Adapters an den Klemmbackenaufnahmen 19, 20 gehalten sein.

Die gezeigte Biegemaschine 3 kann als Antriebsanordnung 21 für den verstellbaren oberen Klemmbalken 16, nämlich den Druckbalken, zumindest ein mit elektrischer Energie betriebenes Antriebsmittel 22 aufweisen. Das oder die Antriebsmittel 22 sind mit einer aus einem Energienetz 23 angespeisten Steuervorrichtung 24 leitungsverbunden. Über ein mit der Steuervorrichtung 24 leitungsverbundenes Eingabeterminal 25 kann beispielsweise der Betrieb der Biegemaschine 3 gesteuert werden.

Bei den Antriebsmitteln 22 handelt es sich bevorzugt um elektromotorisch betriebene Spindeltriebe 26, wie sie allgemein bekannt sind, von denen Stellmittel 27 für eine reversible Stellbewegung des durch den Druckbalken gebildeten oberen Klemmbalkens 16 mit diesem, zum Beispiel antriebsverbunden sind. Es können aber auch andere aus dem Stand der Technik bekannte Antriebsmittel 22, wie z.B. Zylinder-Kolbenanordnungen, Schrittmotore, Zahnstangenantriebe oder dergleichen, eingesetzt werden.

Auf weitere für den Betrieb einer derartigen Biegemaschine 3 erforderliche Details, wie beispielsweise Sicherheitseinrichtungen, Anschlagsanordnungen und/oder Kontrollvorrichtungen wird in der gegenständlichen Beschreibung zur Vermeidung einer unnötigen Länge der Beschreibung verzichtet.

Weiters ist hier noch vereinfacht dargestellt, dass die beiden Klemmbalken 13, 16, insbesondere deren Werkzeugaufnahmen 19, 20, bzw. das daran gehaltene Klemmwerkzeug 4 mit seinem bzw. seinen unteren und oberen Klemmbacken 5, 6, bei einer Betrachtung in Längsrichtung der Klemmbalken 13, 16 eine sich dazwischen erstreckende Verstellebene 28 definieren. Die Verstellebene 28 verläuft bevorzugt mittig bezüglich der Klemmbalken 13, 16 oder den an diesen angeordneten Klemmbackenaufnahmen 19, 20. Im vorliegenden Ausführungsbeispiel wird hier eine vertikal ausgerichtete Ebene verstanden, welche von den beiden zuvor beschriebenen Richtungen oder Achsen, nämlich der "Y"-Achse und der "Z"-Achse aufgespannt wird. Die beiden Klemmbacken 5, 6 bilden zwischen sich und an einander zugewendeten Enden einen Klemmbereich 29 aus. Einander zugewendete untere und obere Klemmflächen 30, 31 der beiden Klemmbacken 5, 6 sind bevorzugt rechtwinkelig bezüglich der Verstellebene 28 ausgerichtet. Diese Klemmflächen 30, 31 dienen dazu, das Blech je nach dessen Wandstärke für die Durchführung des Biegevorgangs zwischen den beiden Klemmbacken 5, 6 positioniert zu halten.

Ein zusätzlicher Auflagetisch 32 mit seiner eine Auflageebene 33 definierenden Auflagefläche ist bevorzugt im Bereich der Vorderseite oder der Beschickungsseite der Biegemaschine 3 angeordnet. Die Auflageebene 33 kann auch als Unterstützungsebene bezeichnet werden. Dabei sei erwähnt, dass die Auflagefläche nicht vollflächig ausgebildet sein muss sondern auch aus mehreren in Zuführrichtung des zu bearbeitenden Blechs nebeneinander und/oder hintereinander angeordneten Auflageteilflächen gebildet sein kann. Die von der Auflageebene 33 definierte Auflagefläche ist bevorzugt in der gleichen Ebene angeordnet, wie die untere Klemmfläche 30 der unteren Klemmbacke 5. Diese dient bei großflächigeren Blechen als zusätzliche Unterstützung, um ein unbeabsichtigtes Abknicken und damit verbunden eine Beschädigung bei dünneren Blechen zu vermeiden.

Unter einem Biegebereich 34 wird dabei jener Bereich verstanden, welcher dazu dient, aus dem zumeist ebenflächig vorliegenden, noch unverformten Blech das zu fertigende Werkstück 2 zu bilden oder ein bereits vorverformtes Werkstück 2 weiter zu bearbeiten, indem zumindest eine zusätzliche Abkantung ausgebildet wird.

Der Biegebereich 34 liegt dabei zumeist beabstandet von der Verstellebene 28 der Klemmbalken 13, 16 und wird durch einander zugewendete Endabschnitte zumindest einer, bevorzugt jedoch beider Klemmbacken 5, 6 gebildet. Im vorliegenden Ausführungsbeispiel ist der Biegebereich 34 auf der vom Auflagetisch 32 oder einer nicht näher dargestellten Bedienperson abgewendeten Seite der Klemmbalken 13, 16 angeordnet. Damit ist der Biegebereich 34 innerhalb des Maschinengestells 7 verlaufend angeordnet.

Der Biegebereich 34 bildet am herzustellenden Werkstück 2 zumeist eine bevorzugt geradlinig verlaufende Biegelinie aus, wobei sich beidseits des Biegebereichs 34 jeweils Schenkel infolge des durchgeführten Biegevorgangs ausbilden. Einer der Schenkel des Werkstücks 2 ist in klemmender Stellung zwischen den beiden Klemmflächen 30, 31 der Klemmbacken 5, 6 gehalten, wobei der zumindest eine weitere Schenkel außerhalb der Klemmflächen 30, 31 angeordnet ist. Je nach gewünschter bzw. herzustellender Geometrie des Werkstücks 2 schließen die beiden Schenkel zwischen sich einen Biegewinkel ein. Dieser Biegewinkel wird in einer senkrecht bezüglich der Biegelinie ausgerichteten Bezugsebene gemessen. Die Bezugsebene ihrerseits ist weiters bevorzugt auch noch bezüglich der Verstellebene 28 dazu in senkrechter Richtung verlaufend ausgerichtet.

Dabei sei erwähnt, dass das Maschinengestell 7 der Biegemaschine 3 nur sehr vereinfacht dargestellt ist, wobei es auch noch möglich ist, davon abweichende Ausführungsformen einzusetzen. So könnte z.B. das Maschinengestell 7 oder der Maschinenkörper mit einem freien Ständerdurchgang ausgebildet sein. In diesem Fall würden die Klemmbackenaufnahmen 19, 20 zwischen den Seitenwangen 9, 10 bzw. Seitenteilen aufgenommen werden können. Bei einer anderen Ausbildung des Maschinengestells 7 bzw. des Maschinenkörpers ist kein freier Ständerdurchgang möglich, wodurch die Klemmbackenaufnahmen 19, 20 nicht zwischen den Seitenwangen 9, 10 bzw. Seitenteilen aufgenommen werden können.

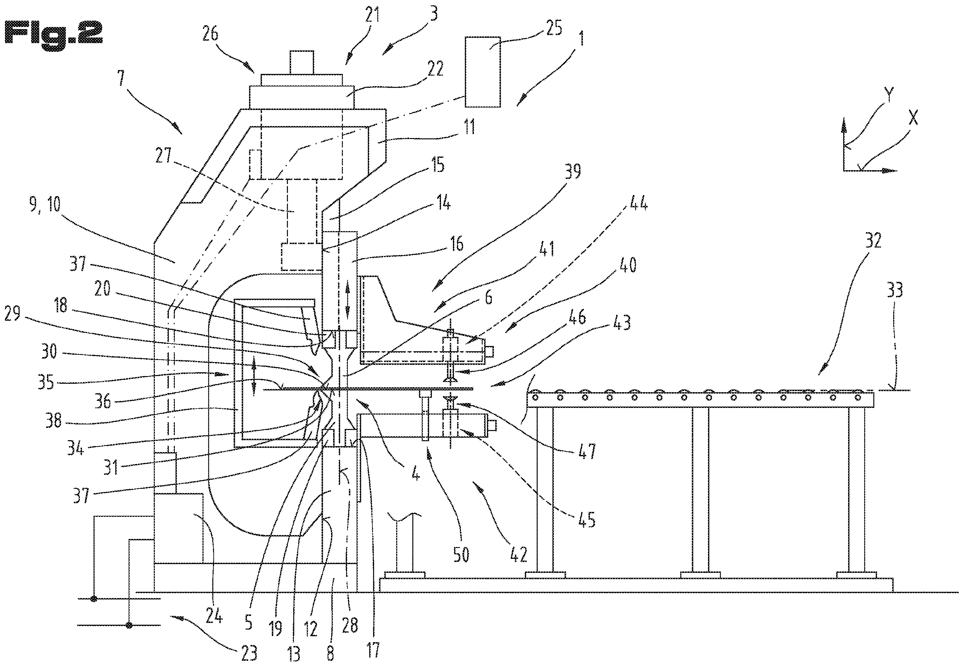

Zur Durchführung des Biegevorgangs umfasst die Biegemaschine 3 der Fertigungsanlage 1 auch noch eine Biegeeinheit 35, welche auch als Abkanteinheit oder Umformeinheit bezeichnet werden kann. Eine mögliche Ausbildung derselben ist vereinfacht in der Fig. 2 angedeutet und kann je nach durchzuführendem Biegevorgang relativ bezüglich des Maschinengestells 7 dazu verstellt werden. Der besseren Übersichtlichkeit halber, wurde in der Fig. 1 auf die Darstellung der Biegeeinheit 35 sowie deren Komponenten verzichtet.

Dabei kann das zwischen den beiden Klemmbacken 5, 6 vorpositioniert und geklemmt gehaltene Blech zur Bildung des Werkstücks 2 durch einen Biegevorgang, insbesondere einen Abkantvorgang, entlang der den Biegebereich 34 bildenden Biegelinie umgeformt, insbesondere abgekantet werden.

Je nach durchzuführender Abkantung des zwischen den Klemmbacken 5, 6 geklemmt gehalten Blechs zur Herstellung des Werkstücks 2 bildet entweder die untere Klemmbacke 5 oder die obere Klemmbacke 6 den Abkantbereich und damit den Biegebereich 34 aus. So bildet die untere Klemmbacke 5 eine erste Umformkante aus oder weist diese auf. Die obere Klemmbacke 6 bildet eine zweite Umformkante aus oder weist diese auf.

Die beiden zuvor beschriebenen Klemmflächen 30, 31 der Klemmbacken 5, 6 definieren bei einer aneinander anliegenden Stellung eine Werkstückauflageebene 36 für das herzustellende Werkstück 2. Bevorzugt ist die Werkstückauflageebene 36 in vertikaler Richtung gesehen in der gleichen Höhe wie die vom Auflagetisch 32 definierte Auflageebene 33 angeordnet. Die beiden Ebenen sind bevorzugt zueinander planparallel verlaufend ausgerichtet und können in einer gemeinsamen Ebene angeordnet sein.

Die Biegeeinheit 35 kann ein oder aber auch mehrere Biegewerkzeuge 37 aufweisen, welches oder welche an einem Biegebalken 38 angeordnet sein können. Der Biegebalken 38 kann an nicht näher dargestellten Biegebalkenführungen mittels eines Biegebalkenantriebs relativ bezüglich des Maschinengestells 7 verstellbar sein. Es könnte aber auch nur ein um eine parallel bezüglich des Biegebereichs 34 verschwenkbares Biegewerkzeug 37 vorgesehen sein, welches je nach gewünschter Biegerichtung einmal oberhalb der Werkstückauflageebene 36 und einmal unterhalb der Werkstückauflageebene 36 angeordnet sein kann und das zum Biegen vorgesehene Ende des Biegewerkzeug 37 jeweils in Richtung auf den Biegebereich zeigend ausgerichtet ist.

Weiters ist in den Fig. 1 und 2 noch vereinfacht dargestellt, dass die Fertigungsanlage 1 auch noch eine Manipulationsvorrichtung 39 zur Manipulation von zumeist ebenflächigen Blechen oder bereits vorgebogenen und weiter zu bearbeitenden Werkstücken 2 umfassen kann. Die Manipulationsvorrichtung 39 wird nachfolgend im Detail noch näher beschrieben werden.

Die Manipulationsvorrichtung 39 umfasst ihrerseits eine Traganordnung 40 mit einer eigenen oberen Trageinheit 41 und einer eigenen unteren Trageinheit 42. Unter einer eigenen Trageinheit 41, 42 wird hier verstanden, dass es sich grundsätzlich um voneinander eigenständige Baueinheiten handelt. Die obere Trageinheit 41 kann ihrerseits direkt am Maschinengestell 7 und/oder auch am oberen Klemmbalken 16 angeordnet und bevorzugt verstehend verbunden sein. Die untere Trageinheit 42 kann ihrerseits ebenfalls direkt am Maschinengestell 7 und/oder auch am unteren Klemmbalken 13 angeordnet und bevorzugt damit verstehend verbunden sein.

Die beiden Trageinheit 41, 42 ragen bevorzugt von der Biegemaschine 3, insbesondere deren Maschinengestell 7, auf die vom Biegebereich 34 abgewendete Seite bzw. Richtung in Richtung auf die Bedienseite bzw. Beschickungsseite vor. Weiters sind die beiden Trageinheit 41, 42 in vertikaler Richtung, also in senkrechter Richtung bezüglich der Werkstückauflageebene 36 oder der Auflageebene 33, voneinander distanziert angeordnet. Die mechanische Verbindung bzw. gegenseitige Halterung und Abstützung der beiden Trageinheit 41, 42 ist durch den Maschinenrahmen oder das Maschinengestell 7 gebildet. Die vom Auflagetisch 32 definierte Auflageebene 33 wird so von keiner der Trageinheiten 41, 42 geschnitten oder durchragt. Damit kann im Zufuhrbereich ein großflächiger freier Bedienraum bzw. Einlegeraum geschaffen werden.

Weiters ist hier noch vorgesehen, dass die obere Trageinheit 41 oberhalb der Auflageebene 33 angeordnet ist und die untere Trageinheit 42 unterhalb der Auflageebene 33 angeordnet ist. Damit ist zumindest in einem vor der Biegemaschine 3 befindlichen Beschickungsbereich bzw. Zufuhrbereich sowie bei einer für das zu manipulierende Blech oder das herzustellende Werkstück 2 aufzunehmenden geöffneten Einlegestellung die obere Trageinheit 41 vollständig oberhalb der Auflageebene 33 angeordnet. Bei der gleichen geöffneten Einlegestellung zum Einbringen des Blechs oder des Werkstücks 2 ist die untere Trageinheit 42 vollständig unterhalb der Auflageebene 33 angeordnet.

Weiters umfasst die Manipulationsvorrichtung 39 auch noch eine Halteanordnung 43, welche Halteanordnung 43 ihrerseits eine obere Halteeinheit 44 sowie eine untere Halteeinheit 45 umfassen kann. Um eine Klemmwirkung für das zu manipulierende Blech oder das Werkstück 2 zu erzielen, sind die beiden Halteeinheiten 44, 45 zum Zusammenwirken ausgebildet bzw. vorgesehen. Unter Zusammenwirken wird verstanden, dass die beiden Halteeinheiten 44, 45 derart ausgebildet und zueinander angeordnet sind oder zueinander angeordnet werden können, dass eine ausreichende Klemmwirkung auf das zwischen den beiden Halteeinheiten 44, 45 befindliche Blech für dessen Manipulation ausgeübt werden kann. So könnten die beiden Halteeinheiten 44, 45 auch als Klemmeinheiten bezeichnet werden. Die Manipulationsvorrichtung 39 ist für die Manipulation des Blechs oder des herzustellenden Werkstücks 2 von einer geöffneten Einlegestellung in eine das Blech oder das Werkstück 2 klemmende Klemmstellung verstellbar ausgebildet. Insbesondere erfolgt eine Verstellung von zumindest einer der Halteeinheiten 44, 45 in Richtung auf die jeweils gegenüberliegend angeordnete andere Halteeinheit 45, 44.

Die obere Halteeinheit 44 ist im vorliegenden Ausführungsbeispiel an der oberen Trageinheit 41 und die untere Halteeinheit 45 an der unteren Trageinheit 42 angeordnet. Weiters ist noch vorgesehen, dass auch die an den jeweiligen Trageinheiten 41, 42 angeordneten Halteeinheiten 44, 45 in einer für das zu manipulierende Blech oder das herzustellende Werkstück 2 aufzunehmenden geöffneten Einlegestellung der Manipulationsvorrichtung 39 sowie in einem Beschickungsbereich vor der Biegemaschine 3 einmal vollständig oberhalb der Auflageebene 33 und einmal vollständig unterhalb der Auflageebene 33 angeordnet sind. Da die obere Halteeinheit 44 an der oberen Trageinheit 41 angeordnet ist, befindet sich auch diese in der zuvor beschriebenen geöffneten Einlegestellung vollständig oberhalb der Auflageebene 33. Gleiches gilt aber auch für die Anordnung der unteren Halteeinheit 45 an der unteren Trageinheit 42, wobei dann die untere Halteeinheit 45 vollständig unterhalb der Auflageebene 33 angeordnet ist. So ist auch gewährleistet, dass zumindest in der geöffneten Einlegestellung auch keine der Halteeinheiten 44, 45 die Auflageebene 33 schneidet oder überragt.

Es kann auch noch vorgesehen sein, dass die obere Halteeinheit 44 an der oberen Trageinheit 41 verstellbar geführt ist. Dabei kann bevorzugt eine Verstellrichtung gewählt werden, bei welcher die obere Halteeinheit 44 in einer senkrechten Richtung bezüglich dem, von zumindest einem der Klemmbacken 5, 6 definierten Biegebereich 34 sowie in paralleler Richtung bezüglich der Auflageebene 33 verstellbar ausgebildet und auch geführt ist. Auf die Darstellung einer Antriebseinheit wurde der besseren Übersichtlichkeit halber verzichtet.

Vorteilhaft ist es weiters, wenn auch die untere Halteeinheit 45 an der unteren Trageinheit 42 verstellbar geführt ist. Auch kann hier wiederum eine Verstellrichtung gewählt werden, bei welcher die untere Halteeinheit 45 in einer senkrechten Richtung bezüglich dem, von zumindest einem der Klemmbacken 5, 6 definierten Biegebereich 34 sowie in paralleler Richtung bezüglich der Auflageebene 33 verstellbar ausgebildet und auch geführt ist. Auf die Darstellung von Antriebseinheiten wurde der besseren Übersichtlichkeit halber verzichtet.

Durch die räumliche Trennung der beiden Trageinheiten 41, 42 mit den jeweils daran angeordneten Halteeinheiten 44, 45 sollen die beiden Halteeinheiten 44, 45 gemeinsam und zueinander synchron verstellbar an jeweils einer nicht näher bezeichneten Führungsanordnung geführt sein. Damit kann eine sichere Manipulation des Blechs oder des weiter zu bearbeitenden Werkstücks 2 erzielt werden.

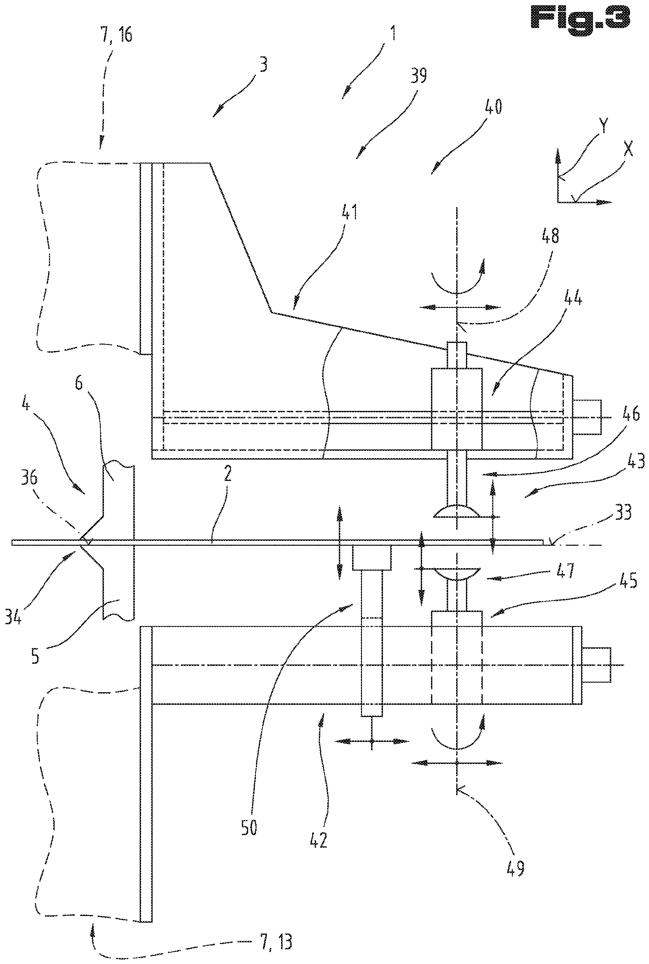

Wie nun besser aus der Fig. 3 zu ersehen ist, sind bei dieser Darstellung die zuvor vereinfacht dargestellten Komponenten der Manipulationsvorrichtung 39 in größerem Maßstab und auch stilisiert vereinfacht gezeigt.

Die hier vereinfacht und stilisiert dargestellte Manipulationsvorrichtung 39 umfasst die Traganordnung 40 mit der oberen Trageinheit 41 und der unteren Trageinheit 42. Jede der beiden Trageinheiten 41, 42 ist an einem nur schematisch angedeuteten Maschinengestell 7 und/oder an einem der Klemmbalken 13, 16 angeordnet. Auf die Darstellung der Befestigung wurde der besseren Übersichtlichkeit halber verzichtet. Wie bereits zuvor beschrieben, kann die obere Trageinheit 41 entweder direkt an einem Bauteil des feststehenden Maschinengestells 7 oder aber auch am oberen Klemmbalken 16 angeordnet und befestigt sein. Ist die obere Trageinheit 41 am oberen Klemmbalken 16 befestigt, macht die obere Trageinheit 41 alle Verstellbewegungen des oberen Klemmbalkens 16 mit. Dabei ist auf die Auslegung der Stellbewegungen der oberen Halteeinheit 44 in Bezug auf die Lage des zu bearbeitenden Blechs bzw. Werkstücks 2 Bedacht zu nehmen. Die untere Trageinheit 42 kann auch entweder direkt am Maschinengestell 7 und/oder aber auch am unteren Klemmbalken 13 angeordnet, insbesondere ortsfest daran befestigt sein.

Es wäre auch noch möglich, dass die Trageinheit 41, 42 direkt am Maschinengestell 7 befestigt ist, jedoch in seiner Lage vor dem Klemmbalken 13, 16 angeordnet ist. In diesem Fall sind im Klemmbalken 13 und/oder 16 jeweils an die gewählten Befestigungsmittel angepasste Durchsetzungen oder Durchbrüche vorzusehen, damit einerseits die Befestigung gewährleistet ist und andererseits die ungehinderte Verstellbewegung des Klemmbalkens 13 und/oder 16 von der Biegemaschine durchgeführt werden kann.

Die obere Halteeinheit 44 umfasst zumindest ein oberes Halteelement 46, welches dazu dient oder ausgebildet ist, in klemmenden Kontakt mit dem Blech oder dem Werkstück 2 treten zu können.

Die untere Halteeinheit 45 umfasst ihrerseits zumindest ein unteres Halteelement 47. Die beiden Halteelemente 46, 47 sind vereinfacht dargestellt und können mitsamt der jeweiligen Halteeinheit 44 und/oder 45 in senkrechter Richtung bezüglich dem durch zumindest einen der Klemmbacken 5 und/oder 6 definierten Biegebereich 34 sowie in paralleler Richtung bezüglich der Auflageebene 33 an der jeweiligen Trageinheit 41, 42 verstellt werden. Dies ist vereinfacht jeweils durch Doppelpfeile dargestellt.

Die Halteelemente 46, 47 können unterschiedlichst ausgebildet sein und dienen grundsätzlich zur Kontaktierung mit jeweils einer Flachseite des Blechs oder Werkstücks 2. Weiters wäre es möglich, die Halteelemente 46, 47 unter Zwischenschaltung eines Federelements oder Druckelements am Blech oder Werkstück abzustützen. Es wäre auch noch möglich, einen Kontaktkopf des Halteelements 46, 47, welcher an dem Blech oder an dem Werkstück 2 zur Anlage kommt, mit zumindest einem Saugeingang zu versehen, welcher Saugeingang mit einem Unterdruckerzeuger in Leitungsverbindung steht. Eine andere Möglichkeit bestünde noch darin, den Kontaktkopf mit einem Magnet auszustatten, sodass jene Werkstoffe, welche von einem Magnet angezogen werden können, mittels der magnetischen Haltekraft an dem jeweiligen Halteelement 46, 47 für die Manipulation daran halten zu können.

Um eine Orientierungsänderung des zuzuführenden Blechs oder Werkstücks 2 in Bezug auf den Biegebereich 34 durchführen zu können, kann zumindest eines der Halteelemente 46, 47 um eine in senkrechter Richtung bezüglich der Auflageebene 33 ausgerichtete Drehachse 48 und/oder 49 verschwenkbar bzw. verdrehbar ausgebildet sein. So weist bei diesem Ausführungsbeispiel das obere Halteelement 46 die obere Drehachse 48 auf. Das untere Halteelement 47 weist seinerseits die untere Drehachse 49 auf. Für die gegenseitige klemmende Halterung der beiden Halteelemente 46, 47 werden diese jeweils am Blech oder dem zu bearbeitenden Werkstück 2 zur Anlage verbracht, wobei hier eine bevorzugt zueinander fluchtende Ausrichtung der beiden Drehachsen 48, 49 vorgesehen sein sollte.

Für die Durchführung der Dreh- oder Schwenkbewegung von zumindest einem der Halteelemente 46, 47 kann dieses mit einem nicht näher dargestellten Schwenkantrieb ausgestattet sein oder damit in Antriebsverbindung stehen. Mittels feinfühliger Steuerungen kann das Ausmaß der durchzuführenden Verschwenkung des Blechs oder des Werkstücks 2 um eine der Drehachsen 48 und/oder 49 exakt auf den Schwenkantrieb übertragen werden.

Weiters ist noch dargestellt, dass zumindest eines der Halteelemente 46 und/oder 47 in senkrechter Richtung bezüglich der Auflageebene 33 in Richtung auf das jeweils bezüglich der Auflageebene 33 gegenüberliegend angeordnet andere Halteelement 47, 46 verstellbar ausgebildet ist. Dies ist ebenfalls durch Doppelpfeile angedeutet.

Weiters ist noch im Bereich der unteren Trageinheit 42 dargestellt, dass an dieser ein unteres Auflageelement 50 angeordnet sein kann. Das untere Auflageelement 50 kann dabei eine Komponente der unteren Halteeinheit 45 darstellen. Das untere Auflageelement 50 dient dazu, eine zusätzliche Abstützwirkung für das zu bearbeitende Blech oder Werkstück 2 auszubilden. Weiters kann das Auflageelement 50 an der unteren Trageinheit 41 verstellbar an einer Führungsanordnung geführt sein. Die Verstellbewegung erfolgt dabei bevorzugt in senkrechter Richtung bezüglich einem von zumindest einem der Klemmbacken 5, 6 definierten Biegebereich 34, sowie in paralleler Richtung bezüglich der Auflageebene 33. Auf die Darstellung von entsprechenden Führungen sowie Antriebskomponenten ist der besseren Übersichtlichkeit halber verzichtet worden. Weiters kann die Verstellbewegung des unteren Auflageelements 50 bevorzugt unabhängig von der Verstellbewegung des unteren Halteelements 47 erfolgen. Es sei erwähnt, dass auch das untere Auflageelement 50 derart ausgebildet und angeordnet sein kann, dass auch dieses in der für das zu manipulierende Blech oder das herzustellende Werkstück aufzunehmenden geöffneten Einlegestellung der Manipulationsvorrichtung sowie in einem Beschickungsbereich vor der Biegemaschine vollständig unterhalb der Auflageebene 33 angeordnet ist oder eine vom Auflageelement 50 gebildete Abstützfläche in der Auflageebene 33 liegend angeordnet ist.

Es wäre auch noch möglich, dass zumindest eine Teilkomponente des unteren Auflageelements 50 in senkrechter Richtung bezüglich der Auflageebene 33 in Richtung auf die bezüglich der Auflageebene 33 gegenüberliegend angeordnete obere Trageinheit 41 verstellbar ausgebildet ist. Damit kann eine Höhenanpassung für das abzustützende Blech oder das zu bearbeitende Werkstück 2 erfolgen. Diese in vertikaler Richtung mögliche Verstellbewegung der Teilkomponente des Auflageelements 50 kann unabhängig von der in gleicher Richtung erfolgenden Verstellbewegung des unteren Halteelements 47 erfolgen. Dadurch, dass das untere Halteelement 47 unabhängig vom unteren Auflageelement 50 an der unteren Trageinheit 42 verstellbar geführt ist, kann auch eine voneinander unabhängige Verstellbewegung durchgeführt werden.

Das untere Auflageelement 50 kann auch noch dazu dienen, das zwischen den beiden Klemmbacken 5, 6 für den Biegevorgang geklemmt gehaltene Blech oder das weiter zu bearbeitende Werkstück 2 an der vom Biegebereich 34 abgewendeten Seite der Klemmbacken 5, 6 zu unterstützen. In der Zwischenzeit kann von der Manipulationsvorrichtung 39 mit den beiden Halteeinheiten 44, 45 bereits ein weiteres Blech oder zu bearbeitendes Werkstück 2 im Bereich des Auflagetisches 32 für den nachfolgenden Biegevorgang vorpositioniert werden. Dabei kann auch ein Schwenkvorgang von zumindest einem der Halteelemente 46, 47 durchgeführt werden, um so das Blech oder das Werkstück 2 in seiner Ausrichtung derart anzuordnen, dass die vorgesehene Biegelinie am Blech oder Werkstück 2 in etwa oder bereits exakt parallel zum Biegebereich 34 verlaufend ausgerichtet ist. Ist der Biegevorgang bei dem bereits geklemmt zwischen den Klemmbacken 5, 6 gehaltenen Blech oder Werkstück 2 durchgeführt, kann dieses seitlich bzw. in paralleler Richtung bezüglich des Biegebereichs 34 beispielsweise durch Wegschieben entfernt werden und unmittelbar nachfolgend das bereits vorbereitete und vorpositionierte weitere Blech oder Werkstück 2 von den Halteeinheiten 44, 45 zwischen die geöffneten Klemmbacken 5, 6 für die Durchführung des nachfolgenden Biegevorganges verbracht werden.

Es wäre aber auch noch denkbar, dass z.B. die obere Halteeinheit 44, insbesondere deren oberes Halteelement 46 nicht mit dem unteren Halteelement 47 für die Klemmung des Blechs oder des Werkstücks 2 zusammenwirkt, sondern mit dem unteren Auflageelement 50.

Die Verstellbewegung bzw. Verstellrichtung der beiden Halteeinheiten 44, 45 an den jeweiligen Trageinheiten 41, 42 erfolgt dabei bevorzugt ausschließlich in "X"-Richtung. Die höhenmäßige Verstellbewegung der Halteelemente 46, 47 sowie gegebenenfalls des unteren Auflageelements 50 erfolgt bevorzugt ausschließlich in "Y"-Richtung.

Die jeweils zuvor beschriebene vollständige Anordnung der jeweiligen Trageinheit 41, 42 sowie der daran verstellbar angeordneten Halteeinheiten 44 oder 45, entweder oberhalb der Auflageebene 33 oder unterhalb der Auflageebene 33 ist so zu verstehen, dass bei ebenflächiger Lage des zu bearbeitenden Blechs in der Auflageebene 33 diese von keinem der beiden zuvor beschriebenen Bauteile bzw. Bauteilkomponenten überragt ist. Wesentlich dabei ist, dass zwischen den beiden Trageinheiten 41, 42 in jenem vor den Klemmbacken 5, 6 befindlichen Zuführbereich bzw. Beschickungsbereich keine gegenseitige Verbindung besteht und so ein ausreichender Freiraum in unterbrechungsloser Weise ausgebildet ist. Die beiden Trageinheiten 41, 42 sind voneinander unabhängig ausgebildet und jeweils für sich getrennt voneinander direkt an der Biegemaschine 3 gehalten bzw. daran befestigt.

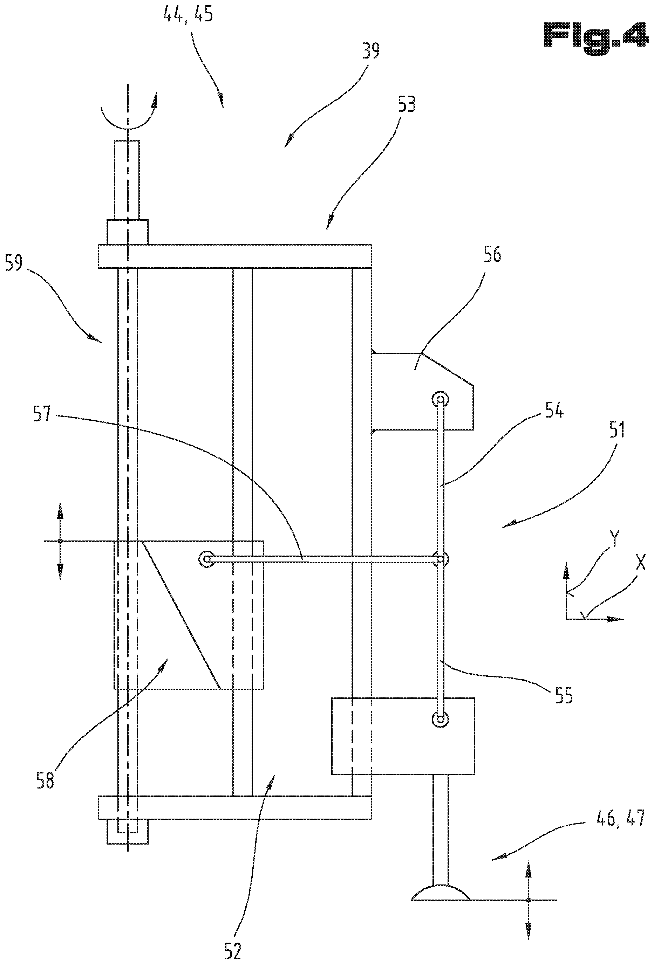

In der Fig. 4 ist eine mögliche und gegebenenfalls für sich eigenständige Anordnung bzw. Ausbildung einer der Halteeinheiten 44 und/oder 45 gezeigt, welche für sich gegebenenfalls eine eigenständige Lösung darstellen kann. Um unnötige Wiederholungen zu vermeiden, wird auf die detaillierte Beschreibung in den vorangegangenen Fig. 1 bis 3 hingewiesen bzw. Bezug genommen. Weiters werden für gleiche Teile gleiche Bauteilbezeichnungen wie in den vorangegangenen Fig. 1 bis 3 verwendet.

Die von der Halteeinheit 44, 45, insbesondere deren Halteelemente 46, 47 durchzuführende Verstellbewegung in "Y"-Richtung kann beispielsweise durch eine Kniehebelanordnung 51 im Zusammenwirken mit einer Längsführungsanordnung 52 realisiert werden.

Die Halteeinheit 44, 45 umfasst ihrerseits einen Basisrahmen 53, an welchem das Halteelement 46, 47 verstellbar geführt ist. Die Kniehebelanordnung 51 umfasst einen ersten Kniehebel 54 sowie einen zweiten Kniehebel 55. Die beiden Kniehebel 54, 55 sind an einander zugewendeten Enden gelenkig miteinander verbunden. Das vom gemeinsamen Verbindungsbereich der beiden Kniehebel 54, 55 abgewendete weitere Ende des ersten Kniehebels 54 ist ortsfest, jedoch gelenkig, beispielsweise mittels einer Konsole 56, mit dem Basisrahmen 53 verbunden. Ein vom Verbindungsbereich der beiden Kniehebel 54, 55 abgewendete weiteres Ende des zweiten Kniehebels 55 ist mit dem zu verstellenden Halteelement 46, 47 gelenkig verbunden.

Im Verbindungsbereich zwischen dem ersten Kniehebel 54 und dem zweiten Kniehebel 55 ist ein Stellhebel 57 gelenkig angeordnet oder angelenkt. Am Basisrahmen 53 ist weiters ein Stellelement 58 ebenfalls in "Y"-Richtung verstellbar daran geführt. Der Stellhebel 57 ist weiters mit dem Stellelement 58 gelenkig verbunden. In der hier gezeigten vollständig gestreckten Stellung des ersten Kniehebels 54 und des zweiten Kniehebels 55 kann beispielsweise der Stellhebel 57 eine parallele Ausrichtung bezüglich der Auflageebene 33 einnehmen.

Weiters ist noch dargestellt, dass das Stellelement 58 mit einem Stellglied 59, beispielsweise einer Kugelrollspindel oder dergleichen, in Antriebsverbindung steht mittels des Stellglieds 59 das Stellelement 58 in "Y"-Richtung entlang des Basisrahmens 53 geführt verstellt werden kann. Aufgrund dieser Verstellbewegung und der Anordnung des Stellhebels 57 zwischen dem Stellelement 58 und den beiden miteinander gelenkig verbundenen Kniehebeln 54, 55, kann bei einer Verlagerung des Stellelements 58 auf die von der Auflageebene 33 abgewendeten Seite eine Verlagerung des Halteelements 46, 47 erzielt werden. Erfolgt die Verstellung des Halteelements 46, 47 in "Y"-Richtung sowie auf die von der Auflageebene 33 abgewendete Seite, kann die Klemmwirkung des Halteelements 46, 47 vom Blech oder dem Werkstück 2 aufgehoben werden. Bei einer dazu entgegengesetzten, in Richtung auf die Auflageebene 33 gerichtete Verstellbewegung des Stellelements 58 wird das Halteelement 46, 47 in seine Klemmstellung bewegt und am Blech zur Anlage gebracht.

Dabei sei bemerkt, dass die Ausbildung und Anordnung der zuvor beschriebenen Komponenten nur beispielhaft und stark stilisiert dargestellt worden ist. Die zumeist in vertikaler Richtung erfolgende oder durchzuführende Verstellbewegung der Halteelemente 46 und/oder 47 könnte aber auch durch Zahnstangenantriebe, Zylinderkolbenanordnungen, Nockenverstellungen oder anderen Antriebsorgangen erfolgen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | obere Klemmfläche |
| 2 | Werkstück | 32 | Auflagetisch |
| 3 | Biegemaschine | 33 | Auflageebene |
| 4 | Klemmwerkzeug | 34 | Biegebereich |
| 5 | untere Klemmbacke | 35 | Biegeeinheit |
| 6 | obere Klemmbacke | 36 | Werkstückauflageebene |
| 7 | Maschinengestell | 37 | Biegewerkzeug |
| 8 | Bodenplatte | 38 | Biegebalken |
| 9 | Seitenwange | 39 | Manipulationsvorrichtung |
| 10 | Seitenwange | 40 | Traganordnung |
| 11 | Querverband | 41 | obere Trageinheit |
| 12 | Frontstirnfläche | 42 | untere Trageinheit |
| 13 | Klemmbalken | 43 | Halteanordnung |
| 14 | Frontstirnfläche | 44 | obere Halteeinheit |
| 15 | Klemmbalkenführung | 45 | untere Halteeinheit |
| 16 | Klemmbalken | 46 | oberes Halteelement |
| 17 | Stirnfläche | 47 | unteres Halteelement |
| 18 | Stirnfläche | 48 | obere Drehachse |
| 19 | Klemmbackenaufnahme | 49 | untere Drehachse |
| 20 | Klemmbackenaufnahme | 50 | unteres Auflageelement |
| 21 | Antriebsanordnung | 51 | Kniehebelanordnung |
| 22 | Antriebsmittel | 52 | Längsführungsanordnung |
| 23 | Energienetz | 53 | Basisrahmen |
| 24 | Steuervorrichtung | 54 | erster Kniehebel |
| 25 | Eingabeterminal | 55 | zweiter Kniehebel |
| 26 | Spindeltrieb | 56 | Konsole |
| 27 | Stellmittel | 57 | Stellhebel |
| 28 | Verstellebene | 58 | Stellelement |
| 29 | Klemmbereich | 59 | Stellglied |
| 30 | untere Klemmfläche | | |

## Patentansprüche

1. Fertigungsanlage (1) zur Fertigung von Werkstücken (2) aus Blech, insbesondere mittels Umformung, umfassend
- eine Biegemaschine (3) mit einem feststehenden Maschinengestell (7), einem unteren Klemmbalken (13) mit zumindest einer daran gehaltenen unteren Klemmbacke (5), sowie einem oberen Klemmbalken (16) mit zumindest einer daran gehaltenen oberen Klemmbacke (6), wobei einer der Klemmbalken (13, 16) relativ bezüglich des Maschinengestells (7) verstellbar ist, um das herzustellende Werkstück (2) zumindest während des Biegevorganges zwischen den beiden Klemmbacken (5, 6) klemmend zu halten,
- einen Auflagetisch (32), welcher Auflagetisch (32) mit seiner Auflagefläche eine Auflageebene (33) für das Blech oder das herzustellende Werkstück (2) definiert,
- eine Manipulationsvorrichtung (39) mit einer Traganordnung (40) und mit einer Halteanordnung (43), wobei die Halteanordnung (43) eine oberen Halteeinheit (44) und eine damit zusammenwirkende untere Halteeinheit (45) umfasst, und wobei die in einem Frontbereich der Biegenmaschine (3) befindliche Manipulationsvorrichtung (39) für die Manipulation des Blechs oder des herzustellenden Werkstücks (2) von einer geöffneten Einlegestellung in eine das Blech oder das Werkstück (2) klemmende Klemmstellung verstellbar ist,
**dadurch gekennzeichnet,**
- **dass** die Traganordnung (40) eine eigenständige obere Trageinheit (41) und eine eigenständige untere Trageinheit (42) aufweist,
- **dass** die obere Trageinheit (41) oberhalb der Auflageebene (33) angeordnet ist,
- **dass** die untere Trageinheit (42) unterhalb der Auflageebene (33) angeordnet ist,
- **dass** die obere Halteeinheit (44) an der oberen Trageinheit (41) geführt und mittels einer ersten Antriebseinheit verstellbar ist,
- **dass** die untere Halteeinheit (45) an der unteren Trageinheit (42) geführt und mittels einer zweiten Antriebseinheit verstellbar ist,
- **dass** die obere Trageinheit (41) am Maschinengestell (7) und/oder am oberen Klemmbalken (16) angeordnet ist,
- **dass** die untere Trageinheit (42) am Maschinengestell (7) und/oder am unteren Klemmbalken (13) angeordnet ist, und
- **dass** in einer für das zu manipulierende Blech oder das herzustellende Werkstück (2) aufzunehmenden geöffneten Einlegestellung der Manipulationsvorrichtung (39) sowie in einem Beschickungsbereich vor der Biegemaschine (3) die obere Trageinheit (41) mit der oberen Halteeinheit (44) vollständig oberhalb der Auflageebene (33) angeordnet ist und die untere Trageinheit (42) mit der unteren Halteeinheit (45) vollständig unterhalb der Auflageebene (33) angeordnet ist,
- sodass im Frontbereich der Biegemaschine (3) ein unterbrechungsloser Manipulationsfreiraum zur Aufnahme und Manipulation des zu bearbeitenden Werkstücks (2) vorhanden ist.

2. Fertigungsanlage (1) nach Anspruch 1, **dadurch gekennzeichnet, dass** die obere Halteeinheit (44) in senkrechter Richtung bezüglich einem, von zumindest einem der Klemmbacken (5, 6) definierten Biegebereich (34) sowie in paralleler Richtung bezüglich der Auflageebene (33) verstellbar ausgebildet ist.

3. Fertigungsanlage (1) nach einem der vorhergehenden Ansprüche, **dadurch gekennzeichnet, dass** die untere Halteeinheit (45) in senkrechter Richtung bezüglich einem, von zumindest einem der Klemmbacken (5, 6) definierten Biegebereich (34) sowie in paralleler Richtung bezüglich der Auflageebene (33) verstellbar ausgebildet ist.

4. Fertigungsanlage (1) nach einem der vorhergehenden Ansprüche, **dadurch gekennzeichnet, dass** die obere Halteeinheit (44) und die untere Halteeinheit (45) gemeinsam und zueinander synchron verstellbar geführt sind.

5. Fertigungsanlage (1) nach einem der vorhergehenden Ansprüche, **dadurch gekennzeichnet, dass** die obere Halteeinheit (44) zumindest ein oberes Halteelement (46) und die untere Halteeinheit (45) zumindest ein unteres Halteelement (47) aufweist.

6. Fertigungsanlage (1) nach Anspruch 5, **dadurch gekennzeichnet, dass** zumindest eines der Halteelemente (46, 47) um eine in senkrechter Richtung bezüglich der Auflageebene (33) ausgerichtete Drehachse (48) verschwenkbar ist.

7. Fertigungsanlage (1) nach Anspruch 5 oder 6, **dadurch gekennzeichnet, dass** zumindest eines der Halteelemente (46, 47) in senkrechter Richtung bezüglich der Auflageebene (33) in Richtung auf das jeweils bezüglich der Auflageebene (33) gegenüberliegend angeordnete andere Halteelement (47, 46) verstellbar ausgebildet ist.

8. Fertigungsanlage (1) nach einem der vorhergehenden Ansprüche, **dadurch gekennzeichnet, dass** die untere Halteeinheit (45) weiters ein unteres Auflageelement (50) umfasst, und das untere Auflageelement (50) an der unteren Trageinheit (41) in senkrechter Richtung bezüglich einem, von zumindest einem der Klemmbacken (5, 6) definierten Biegebereich (34) sowie in paralleler Richtung bezüglich der Auflageebene (33) verstellbar geführt ist.

9. Fertigungsanlage (1) nach Anspruch 8, **dadurch gekennzeichnet, dass** das untere Auflageelement (50) in senkrechter Richtung bezüglich der Auflageebene (33) in Richtung auf die bezüglich der Auflageebene (33) gegenüberliegend angeordnete obere Trageinheit (41) verstellbar ausgebildet ist.

10. Fertigungsanlage (1) nach einem der Ansprüche 5 bis 9, **dadurch gekennzeichnet, dass** das untere Halteelement (47) unabhängig vom unteren Auflageelement (50) an der unteren Trageinheit (42) verstellbar geführt ist.

11. Fertigungsanlage (1) nach einem der vorhergehenden Ansprüche, **dadurch gekennzeichnet, dass** zumindest eine der Halteeinheiten (44, 45), insbesondere die obere Halteeinheit (44), eine Kniehebelanordnung (51) aufweist, mittels welcher Kniehebelanordnung (51) das zumindest eine Halteelement (46, 47) in senkrechter Richtung bezüglich der Auflageebene (33) von der geöffneten Einlegestellung in die Klemmstellung verstellbar ausgebildet ist.

## Claims

1. A production plant (1) for producing workpieces (2) made from sheet metal, in particular by means of forming, comprising
- a bending machine (3) having a machine frame (7) that is fixed in place, a lower clamping beam (13) having at least one lower clamping jaw (5) held on it, as well as an upper clamping beam (16) having at least one upper clamping jaw (6) held on it, wherein one of the clamping beams (13, 16) is adjustable relative and with respect to the machine frame (7), so as to hold the workpiece (2) to be produced in a clamping manner between the two clamping jaws (5, 6), at least during the bending procedure,
- a support table (32), which support table (32) defines, with its support surface, a support plane (33) for the sheet metal or the workpiece (2) to be produced,
- a manipulation apparatus (39) having a carrier arrangement (40) and having a holding arrangement (43), wherein the holding arrangement (43) comprises an upper holding unit (44) and a lower holding unit (45) that interacts with the former, and wherein the manipulation apparatus (39) located in the front region of the bending machine (3) is adjustable for the manipulation of the sheet metal or of the workpiece (2) to be produced, from an open insertion position into a clamping position that clamps the sheet metal or the workpiece (2),
**characterized in**
- **that** the carrier arrangement (40) has an individual upper carrier unit (41) and an individual lower carrier unit (42),
- **that** the upper carrier unit (41) is disposed above the support plane (33),
- **that** the lower carrier unit (42) is disposed below the support plane (33),
- **that** the upper holding unit (44) is guided on the upper carrier unit (41) and can be adjusted by means of a first drive unit,
- the lower holding unit (45) is guided on the lower carrier unit (42) and can be adjusted by means of a second drive unit,
- **that** the upper carrier unit (41) is disposed on the machine frame (7) and/or on the upper clamping beam (16),
- **that** the lower carrier unit (42) is disposed on the machine frame (7) and/or on the lower clamping beam (13), and
- **that** in an insertion position of the manipulation apparatus (39), which position is open to receive the sheet metal to be manipulated or the workpiece (2) to be produced, as well as in a charging region in front of the bending machine (3), the upper carrier unit (41), together with the upper holding unit (44), is disposed completely above the support plane (33), and the lower carrier unit (42), together with the lower holding unit (45), is disposed completely below the support plane (33),
- so that an uninterrupted free manipulation space for receiving and manipulating the workpiece (2) to be processed is present in the front region of the bending machine (3).

2. The production plant (1) according to claim 1, **characterized in that** the upper holding unit (44) is formed to be adjustable in the perpendicular direction with respect to a bending region (34) defined by at least one of the clamping jaws (5, 6), and in the parallel direction with respect to the support plane (33).

3. The production plant (1) according to one of the preceding claims, **characterized in that** the lower holding unit (45) is formed to be adjustable in the perpendicular direction with respect to a bending region (34) defined by at least one of the clamping jaws (5, 6), and in the parallel direction with respect to the support plane (33).

4. The production plant (1) according to one of the preceding claims, **characterized in that** the upper holding unit (44) and the lower holding unit (45) are guided so as to be adjustable jointly and synchronous to one another.

5. The production plant (1) according to one of the preceding claims, **characterized in that** the upper holding unit (44) has at least one upper holding element (46), and the lower holding unit (45) has at least one lower holding element (47).

6. The production plant (1) according to claim 5, **characterized in that** at least one of the holding elements (46, 47) can be pivoted about a rotation axis (48) oriented in the perpendicular direction with respect to the support plane (33).

7. The production plant (1) according to claim 5 or 6, **characterized in that** at least one of the holding elements (46, 47) is formed to be adjustable in the perpendicular direction with respect to the support plane (33), in the direction toward the respective other holding element (47, 46) arranged opposite to the support plane (33).

8. The production plant (1) according to one of the preceding claims, **characterized in that** the lower holding unit (45) further comprises a lower support element (50), and the lower support element (50) is guided to be adjustable on the lower carrier unit (41) in the perpendicular direction with respect to a bending region (34) defined by at least one of the clamping jaws (5, 6), and in the parallel direction with respect to the support plane (33).

9. The production plant (1) according to claim 8, **characterized in that** the lower support element (50) is formed to be adjustable in the perpendicular direction with respect to the support plane (33), in the direction toward the upper carrier unit (41) arranged opposite to the support plane (33).

10. The production plant (1) according to one of claims 5 to 9, **characterized in that** the lower holding element (47) is guided to be adjustable on the lower carrier unit (42), independent of the lower support element (50).

11. The production plant (1) according to one of the preceding claims, **characterized in that** at least one of the holding units (44, 45), in particular the upper holding unit (44), has a toggle lever arrangement (51), by means of which toggle lever arrangement (51) the at least one holding element (46, 47) is formed to be adjustable from the open insertion position into the clamping position, in the perpendicular direction with respect to the support plane (33).

## Revendications

1. Installation de production (1) pour la production de pièces (2) en tôle, en particulier par formage, comprenant
- une machine de pliage (3) avec un bâti de machine (7) stationnaire, une barre de serrage (13) inférieure avec au moins une mâchoire de serrage (5) inférieure qui y est retenue, ainsi qu'avec une barre de serrage (16) supérieure avec au moins une mâchoire de serrage (6) supérieure qui y est retenue, une des barres de serrage (13, 16) pouvant être déplacée de façon relative par rapport au bâti de machine (7) pour retenir, au moins pendant le processus de pliage, la pièce (2) à fabriquer de façon serrée entre les deux mâchoires de serrage (5, 6),
- une table-support (32), laquelle table-support (32) définit avec sa surface de support un plan de support (33) pour la tôle ou pour la pièce (2) à fabriquer,
- un dispositif de manipulation (39) avec un ensemble porteur (40) et avec un ensemble de retenue (43), l'ensemble de retenue (43) comprenant une unité de retenue (44) supérieure et une unité de retenue (45) inférieure qui coopère avec la précédente, et le dispositif de manipulation (39) situé dans une zone frontale de la machine de pliage (3) pouvant, pour la manipulation de la tôle ou de la pièce (2) à fabriquer, être déplacé d'une position d'insertion ouverte vers une position de serrage serrant la tôle ou la pièce (2),
**caractérisée en ce que**
- l'ensemble porteur (40) comporte une unité porteuse (41) supérieure autonome et une unité porteuse (42) inférieure autonome,
- l'unité porteuse (41) supérieure est disposée au-dessus du plan de support (33),
- l'unité porteuse (42) inférieure est disposée au-dessous du plan de support (33),
- l'unité de retenue (44) supérieure est guidée sur l'unité porteuse (41) supérieure et peut être déplacée au moyen d'une première unité d'entraînement,
- l'unité de retenue (45) inférieure est guidée sur l'unité porteuse (42) inférieure et peut être déplacée au moyen d'une deuxième unité d'entraînement,
- l'unité porteuse (41) supérieure est disposée sur le bâti de machine (7) et/ou sur la barre de serrage (16) supérieure,
- l'unité porteuse (42) inférieure est disposée sur le bâti de machine (7) et/ou sur la barre de serrage (13) inférieure, et
- dans une position d'insertion ouverte du dispositif de manipulation (39) destinée à la réception de la tôle à manipuler ou de la pièce (2) à fabriquer ainsi que dans une zone de chargement en amont de la machine de pliage (3), l'unité porteuse (41) supérieure avec l'unité de retenue (44) supérieure est disposée entièrement au-dessus du plan de support (33), et l'unité porteuse (42) inférieure avec l'unité de retenue (45) inférieure est disposée entièrement au-dessous du plan de support (33),
- de telle sorte que, dans la zone frontale de la machine de pliage (3), il existe un espace libre de manipulation sans interruption destiné à la réception et à la manipulation de la pièce (2) à usiner.

2. Installation de production (1) selon la revendication 1, **caractérisée en ce que** l'unité de retenue (44) supérieure est constituée de façon déplaçable dans la direction verticale par rapport à une zone de pliage (34) définie par au moins l'une des mâchoires de serrage (5, 6) ainsi que dans une direction parallèle par rapport au plan de support (33).

3. Installation de production (1) selon l'une des revendications précédentes, **caractérisée en ce que** l'unité de retenue (45) inférieure est constituée de façon déplaçable dans la direction verticale par rapport à une zone de pliage (34) définie par au moins l'une des mâchoires de serrage (5, 6) ainsi que dans une direction parallèle par rapport au plan de support (33).

4. Installation de production (1) selon l'une des revendications précédentes, **caractérisée en ce que** l'unité de retenue (44) supérieure et l'unité de retenue (45) inférieure sont guidées de façon déplaçable conjointement et de manière synchronisée l'une par rapport à l'autre.

5. Installation de production (1) selon l'une des revendications précédentes, **caractérisée en ce que** l'unité de retenue (44) supérieure comporte au moins un élément de retenue (46) supérieur, et l'unité de retenue (45) inférieure comporte au moins un élément de retenue (47) inférieur.

6. Installation de production (1) selon la revendication 5, **caractérisée en ce qu'**au moins un des éléments de retenue (46, 47) peut pivoter autour d'un axe de rotation (48) orienté dans la direction verticale par rapport au plan de support (33).

7. Installation de production (1) selon la revendication 5 ou 6, **caractérisée en ce qu'**au moins un des éléments de retenue (46, 47) est constitué de façon déplaçable dans la direction verticale par rapport au plan de support (33) en direction de respectivement l'autre élément de retenue (47, 46) disposé de façon opposée par rapport au plan de support (33).

8. Installation de production (1) selon l'une des revendications précédentes, **caractérisée en ce que** l'unité de retenue (45) inférieure comprend en outre un élément d'appui (50) inférieur, et l'élément d'appui (50) inférieur est guidé de façon réglable sur l'unité porteuse (41) inférieure dans la direction verticale par rapport à une zone de pliage (34) définie par au moins l'une des mâchoires de serrage (5, 6) ainsi que dans une direction parallèle par rapport au plan de support (33).

9. Installation de production (1) selon la revendication 8, **caractérisée en ce que** l'élément d'appui (50) inférieur est constitué de façon déplaçable dans la direction verticale par rapport au plan de support (33) en direction de l'unité porteuse (41) supérieure disposée de façon opposée par rapport au plan de support (33).

10. Installation de production (1) selon l'une des revendications 5 à 9, **caractérisée en ce que** l'élément de retenue (47) inférieur est guidé de façon déplaçable sur l'unité porteuse (42) inférieure indépendamment de l'élément d'appui (50) inférieur.

11. Installation de production (1) selon l'une des revendications précédentes, **caractérisée en ce qu'**au moins une des unités de retenue (44, 45), en particulier l'unité de retenue (44) supérieure, comporte un ensemble de levier à genouillère (51), au moyen duquel ensemble de levier à genouillère (51) l'élément de retenue (46, 47) au moins au nombre de un est constitué de façon déplaçable dans la direction verticale par rapport au plan de support (33) pour passer de la position d'insertion ouverte à la position de serrage.
